(19) Europäisches Patentamt
European Patent Office
Office européen des brevets

(11) **EP 1 044 426 B1**

(12) **EUROPÄISCHE PATENTSCHRIFT**

(45) Veröffentlichungstag und Bekanntmachung des Hinweises auf die Patenterteilung:
**28.05.2008 Patentblatt 2008/22**

(21) Anmeldenummer: **99969812.9**

(22) Anmeldetag: **20.09.1999**

(51) Int Cl.:
*G06K 19/073* $^{(2006.01)}$     *G06K 19/07* $^{(2006.01)}$

(86) Internationale Anmeldenummer:
**PCT/EP1999/007018**

(87) Internationale Veröffentlichungsnummer:
**WO 2000/019366 (06.04.2000 Gazette 2000/14)**

(54) **DATENVERARBEITUNGSEINRICHTUNG UND VERFAHREN ZU DEREN SPANNUNGSVERSORGUNG**

DATA PROCESSING DEVICE AND METHOD FOR THE VOLTAGE SUPPLY OF SAME

DISPOSITIF DE TRAITEMENT DE DONNEES ET SON MODE D'ALIMENTATION EN TENSION

(84) Benannte Vertragsstaaten:
**AT DE FR GB**

(30) Priorität: **30.09.1998 DE 19845049**
**05.08.1999 DE 19936919**

(43) Veröffentlichungstag der Anmeldung:
**18.10.2000 Patentblatt 2000/42**

(73) Patentinhaber:
• **NXP B.V.**
**5656 AG Eindhoven (NL)**
• **Philips Intellectual Property & Standards GmbH**
**20099 Hamburg (DE)**
Benannte Vertragsstaaten:
**DE**

(72) Erfinder: **FEUSER, Markus**
**NL-5656 AA Eindhoven (NL)**

(74) Vertreter: **Peters, Carl Heinrich**
**Philips Intellectual Property & Standards GmbH,**
**Postfach 50 04 42**
**52088 Aachen (DE)**

(56) Entgegenhaltungen:
**EP-A- 0 818 875**     **EP-A- 0 831 415**
**GB-A- 2 321 726**     **US-A- 5 414 614**

**Beschreibung**

Technisches Gebiet

Die Erfindung betrifft eine Datenverarbeitungseinrichtung, insbesondere Chipkarte, mit einer integrierten Schaltung und einer Stromversorgung, die einen Spannungsumsetzer aufweist, wobei sich der Spannungsumsetzer zur Unterbrechung eines Eingangssignals zur Spannungseinstellung eines Ausgangssignals eignet. Die Erfindung betrifft ferner ein Verfahren, bei dem ein Spannungsumsetzer ein Eingangssignal zur Spannungseinstellung eines Ausgangssignals unterbricht.

Stand der Technik

In vielen Datenverarbeitungsgeräten mit integrierter Schaltung dienen beispielsweise kryptographische Operation zum Schutz des Betriebes dieser Geräte bzw. zum Schutz von in dem Gerät transportierten Daten. Die hierfür notwendigen Rechenoperationen werden dabei sowohl von Standard-Rechenwerken als auch von dedizierten Crypto-Rechenwerken durchgeführt. Ein typisches Beispiel für letzteres sind Chipkarten bzw. IC-Karten. Bei in diesem Zusammenhang verwendeten Daten bzw. Zwischenergebnissen handelt es sich üblicherweise um sicherheitsrelevante Informationen, wie beispielsweise kryptographische Schlüssel oder Operanden.

Bei von der integrierten Schaltung durchgeführten Rechenoperationen, beispielsweise zur Berechnung von kryptographischen Algorithmen, werden logische Verknüpfungen zwischen Operanden bzw. Zwischenergebnissen durchgeführt. In Abhängigkeit von der verwendeten Technologie führen diese Operationen, insbesondere das Laden von leeren oder zuvor gelöschten Speicherbereichen bzw. Register mit Daten, zu einem erhöhten Stromverbrauch der Datenverarbeitungsgeräte. Bei komplementärer Logik, wie beispielsweise der CMOS-Technik, tritt ein erhöhter Stromverbrauch dann auf, wenn der Wert einer Bit-Speicherzelle geändert wird, d.h. sein Wert sich von "0" auf "1" bzw. von "1" auf "0" ändert. Der erhöhte Verbrauch hängt dabei von der Anzahl der im Speicher bzw. Register geänderten Bitstellen ab. Mit anderen Worten lässt das Laden eines zuvor gelöschten Registers einen Stromverbrauch proportional zum Hamminggewicht des in das leere Register geschriebenen Operanden (=Anzahl der Bits mit dem Wert " 1 ") ansteigen. Durch eine entsprechende Analyse dieser Stromänderung könnte es möglich sein, Informationen über die berechneten Operationen zu extrahieren, so dass eine erfolgreiche Kryptoanalyse von geheimen Operanden, wie beispielsweise kryptographischen Schlüsseln, möglich ist. Mittels Durchführung mehrerer Strommessungen am Datenverarbeitungsgerät könnten beispielsweise bei sehr kleinen Signaländerungen eine hinreichende Extraktion der Informationen ermöglicht werden. Andererseits könnten mehrere Strommessungen eine ggf. erforderliche Differenzbildung ermöglichen. Dieses Art der Kryptoanalyse wird auch als "Differential Power Analysis" bezeichnet, mittels derer ein Außenstehender durch reine Beobachtung von Änderungen des Stromverbrauches des Datenverarbeitungsgerätes eine ggf. unberechtigte Kryptoanalyse der kryptographischen Operationen, Algorithmen, Operanden bzw. Daten erfolgreich ausführen kann. Die "Differential Power Analysis" ermöglicht es somit über die Informationen über die reine Funktionalität hinaus noch zusätzliche interne Informationen einer integrierten Schaltung gewinnen zu können.

Die US-A-5 414 614 offenbart eine Datenverarbeitungseinrichtung mit einem IC und einer Stromversorgung, welche einen Spannungsumsetzer zum Erzeugen eines Ausgangsstroms für die IC-Versorgung durch eine gesteuerte Unterbrechung/Pulsen (Switch) eines Eingangsstroms aufweist, so dass die Ausgangsspannung ≤ der Eingangsspannung ist.

Aus der US 5 297 201 ist es bekannt, einen Hochfrequenz abstrahlenden Computer mit einer Einrichtung zu kombinieren, welche ebenfalls eine Hochfrequenz ähnlich zu derjenigen des Computers abstrahlt. Dadurch ist es für einen unberechtigten Dritten nicht mehr möglich, die Hochfrequenzabstrahlung des Computers zu dekodieren. Eine Kryptoanalyse durch einen Dritten, der unmittelbar Zugang zum Computer hat, kann dieses System jedoch nicht verhindern.

Die WO 90/15489 beschreibt ein gesichertes Kommunikationssystem, bei dem Dummyverkehr bzw. -übertragungen erzeugt werden, um kryptographische Analysen zu erschweren. Eine Kryptoanalyse durch einen Dritten, der unmittelbar Zugang zum Computer hat, kann dieses System jedoch ebenfalls nicht verhindern.

Darstellung der Erfindung, Aufgabe, Lösung, Vorteile

Es ist Aufgabe der vorliegenden Erfindung, eine verbesserte Datenverarbeitungseinrichtung sowie ein verbesserte Verfahren der obengenannten Art zur Verfügung zu stellen, welche die obengenannten Nachteile beseitigen und einen wirksamen Schutz gegen eine "Differential Power Analysis" zur Verfügung stellen.

Diese Aufgabe wird durch eine Datenverarbeitungseinrichtung der o.g. Art und ein Verfahren mit den in Anspruch 1 bzw. 6 gekennzeichneten Merkmalen gelöst.

Dazu ist es erfindungsgemäß vorgesehen, dass der Spannungsumsetzer einen Ausgangsstrom $I_{aus}$, der die integrierte Schaltung versorgt, in einen gepulsten Eingangsstrom Iein mit $V_{aus} \leq V_{ein}$ umsetzt.

Die grundlegende Idee der Erfindung ist es, dass der Ausgangsstrom, der die Charakteristik, auf die die DiPFeretial Power Attack zielt, chipintern liegt und der Eingangsstrom in Gestalt eines gepulsten Stroms bzw. codierten Stroms außen liegt. Dies hat zur Folge, dass auf den Eingang das Ergebnis (bzw. die Wirkung) des Spannungsumsetzers gelegt wird.

Der Vorteil der Erfindung ist also darin zu sehen, dass die Datenverarbeitungseinrichtung bzw. das Verfahren gemäß den Oberbegriffen der Ansprüche 1 bzw. 6 auch zur Codierung eines "Ausgangsstroms", dessen Ergebnis am "Eingang" vorliegt, benutzt werden kann. Auf diese Weise wird auch ein erhöhter Schutz gegen eine "Differential Power Analysis" erreicht.

Vorzugsweise Weitergestaltungen der Datenverarbeitungseinrichtung sind in den Ansprüchen 2 bis 5 beschrieben.

In einer vorteilhaften Ausführungsform weist der Spannungsumsetzer einen Schalter und eine Steuerung für den Schalter auf, wobei der Schalter über eine Kapazität mit Masse verbunden ist und gesteuert von der Steuerung alternierend die Kapazität mit der Eingangsspannung $V_{ein}$ bzw. mit der integrierten Schaltung verbindet.

Ferner ist zweckmäßigerweise eine stromführende Speiseleitung mit einem, mit der Eingangsspannung $V_{ein}$ verbundenen, Eingangsknoten und einem, die Ausgangsspannung $V_{aus}$ an die integrierte Schaltung abgebenden, Ausgangsknoten vorgesehen. Der Schalter ist derart angeordnet, dass er die Speiseleitung zwischen dem Eingangsknoten und dem Ausgangsknoten unterbricht und in einer ersten Stellung die erste Kapazität über einen ersten Speiseleitungsteil mit dem Eingangsknoten und in einer zweiten Stellung über einen zweiten Speiseleitungsteil mit dem Ausgangsknoten verbindet.

Zweckmäßigerweise weist der Spannungsumsetzer eine Eingangskapazität, welche zwischen dem Eingangsknoten und der ersten Stellung des Schalters die Speiseleitung mit Masse verbindet, sowie eine Ausgangskapazität auf, welche zwischen der zweiten Stellung des Schalters und dem Ausgangsknoten die Speiseleitung mit Masse verbindet.

Bei einem Verfahren der o.g. Art ist es erfindungsgemäß vorgesehen, dass der Versorgungsstrom der integrierten Schaltung so umgesetzt wird, dass aussen am Eingang nur ein gepulster Strom mit konstanter Pulshöhe gemessen werden kann. Hierzu ist vorgesehen, dass eine Eingangsspannung $V_{ein}$ zu einer pulsweitenmodulierten Ausgangsspannung $V_{aus}$ umgesetzt und an die integrierte Schaltung gegeben wird.

Dies hat den Vorteil, dass im zeitlichen Verlauf von Strom und Spannung sämtliche charakteristischen Informationen bzgl. der von der integrierten Schaltung durchgeführten Operationen eliminiert sind, so dass ein resultierender Eingangsstrom der integrierten Schaltung nicht mehr als Informationsquelle für eine "Difierential Power Analysis" herangezogen werden kann.

## Kurze Beschreibung der Zeichnungen

Nachstehend wird die Erfindung anhand der beigefügten Zeichnungen näher erläutert. Diese zeigen in

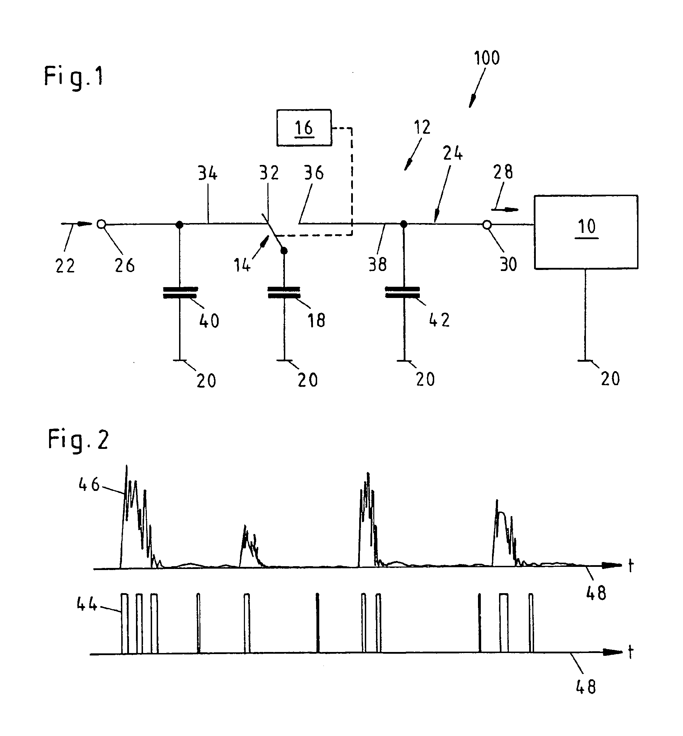

Fig. 1 eine bevorzugte Ausführungsform einer erfindungsgemäßen Datenverarbeitungseinrichtung und Fig. 2 eine graphische Darstellung von Eingangsstrom und Ausgangsstrom eines Spannungsumsetzers für eine erfindungsgemäße Datenverarbeitungseinrichtung über eine Zeitachse.

## Bester Weg zur Ausführung der Erfindung

Die in Fig. 1 dargestellte bevorzugte Ausführungsform einer erfindungsgemäßen Datenverarbeitungseinrichtung 100 umfasst eine integrierte Schaltung 10 und einen Spannungsumsetzer 12 einer ansonsten nicht näher dargestellten Stromversorgung. Der Spannungsumsetzer 12 weist einen Schalter 14 und eine Steuerung 16 für den Schalter 14 auf, wobei der Schalter 14 über eine Kapazität 18 mit Masse 20 verbunden ist und gesteuert von der Steuerung 16 alternierend die Kapazität 18 mit einer Eingangsspannung $V_{ein}$ 22 bzw. mit der integrierten Schaltung 10 verbindet.

Eine stromführende Speiseleitung 24 weist einen mit der Eingangsspannung $V_{ein}$ 22 verbundenen Eingangsknoten 26 und einen eine Ausgangsspannung $V_{aus}$ 28 an die integrierte Schaltung 10 abgebenden Ausgangsknoten 30 auf, wobei der Schalter 14 derart angeordnet ist, dass er die Speiseleitung 24 zwischen dem Eingangsknoten 26 und dem Ausgangsknoten 30 unterbricht und in einer ersten Stellung 32 die Kapazität 18 über einen ersten Speiseleitungsteil 34 mit dem Eingangsknoten 26 und in einer zweiten Stellung 36 über einen zweiten Speiseleitungsteil 38 mit dem Ausgangsknoten 30 verbindet.

Der Spannungsumsetzer 12 weist ferner eine Eingangskapazität 40, welche zwischen dem Eingangsknoten 26 und der ersten Stellung 32 des Schalters 14 die Speiseleitung 24 mit Masse 20 verbindet, sowie eine Ausgangskapazität 42 auf, welche zwischen der zweiten Stellung 36 des Schalters 14 und dem Ausgangsknoten 30 die Speiseleitung 34 mit Masse 20 verbindet.

Eine von Paul Kocher im Internet unter http://www.cryptography.com/dpa veröffentlichte "Differential Power Analysis" hat den Ansatz, dass neben den Ein/Ausgangssignalen zusätzlich eine Stromaufnahme $I_a$ bzw. Spannungseinbrüche $\Delta U_a$ einer Versorgungsspannung $U_a$ der integrierten Schaltung analysiert werden. Der Erfolg dieser Analysemethode hängt davon ab, ob man eine Anzahl $N_A$ von analogen ($I_a(t)$ oder $\Delta U_a(t)$) Signalverläufen $S(k,t)$ über die Zeit mit $k=\{1,...N_A\}$ unterschiedlichen Operanden derart aufnehmen kann, dass eine Summenbildung der Form

$$T(i,t) = \sum_{k=1}^{N_A} p(i,k) \cdot S(k,t)$$

mit den Koeffizienten $p(i,k)$ mit $i=\{0,1,2,...\}$ möglich ist. Betrachtet man unterschiedliche Signalverläufe $S(k_1,t_1)$,

$S(k_2,t_1)$, $S(k_3,t_1)$... zum gleichen Zeitpunkt $t=t_1$, kann eine "Differential Power Analysis" nur funktionieren, wenn die integrierte Schaltung in diesem Moment die gleiche Rechenoperation mit unterschiedlichen Operanden $k=\{1,...,N_A\}$ ausführt, d.h. die Signalverläufe $S(k,t)$ müssen genau übereinandergelegt werden können. Dieses gilt nicht nur für die Berechnung selbst, sondern auch für die Ein- und Ausgabe von Daten.

Die Erfindung eliminiert die zeitlichen Variationen $I_a(t)$ oder $AU_a(t)$ in dem Versorgungsstrom und in der. Versorgungsspannung, da von außen nur noch eine konstante Versorgungsspannung $U_{ein}$ bzw. ein gepulster Versorgungsstrom $I_{ein}$ abgreifbar ist. Hierbei "puffert" der Spannungsumsetzer 12 charakteristische Anteile in Spannung und Strom, welche für Operationen der integrierten Schaltung 10 charakteristisch sind, sozusagen ab.

Bei geeigneter Dimensionierung der Bauteile des Spannungsumsetzers 12 und geeigneter Ansteuerung des Schalters 14 wird am Ausgangsknoten 30 eine Ausgangsspannung $V_{aus}$ 28 erzielt, welche kleiner oder gleich der Eingangsspannung $V_{ein}$ 22 am Eingangsknoten 26 ist und eine vorbestimmte Genauigkeit erfüllt. Dies wird beispielsweise durch eine Pulsweitenmodulation erzielt.

Der Schalter 14 steht zunächst in der ersten Stellung 32, wobei sich die Kapazität 18 auflädt. Anschließend wird der Schalter 14 in die zweite Stellung 36 gebracht, wobei die Kapazität 18 ihre Ladung an den Ausgangsknoten 30 abgibt, der durch die Ausgangskapazität 42 und eine Eigenkapazität der integrierten Schaltung 10 abgepuffert ist. Der Eingangsknoten ist durch die Eingangskapazität 40 abgepuffert.

Fig. 2 veranschaulicht den sich dadurch am Eingangsknoten 26 ergebenden Eingangsstrom $I_{ein}$ 44 sowie den sich am Ausgangsknoten 30 ergebenden Ausgangsstrom $I_{aus}$ 46. Diese Ströme 44, 46 sind jeweils über einer Zeitachse 48 aufgetragen. Von außen ist lediglich der Eingangsstrom Iein 44 zugänglich. Hierzu ist beispielsweise der Spannungsumsetzer 12 selbst, ggf. mit der Steuerung 16, als integrierte Schaltung ausgebildet oder zusätzlich in die integrierte Schaltung 10 integriert. Wie sich unmittelbar aus Fig. 2 ergibt, weist der Eingangsstrom $I_{ein}$ 44 keine von Operationen der integrierten Schaltung abhängigen Schwankungen in seiner Amplitude auf sondern ist vielmehr in konstanter Höhe gepulst. Es könnte höchstens noch eine Information über die Größe der Aktivität der integrierten Schaltung 10, nicht jedoch über die in dieser durchgeführten Operationen selbst, abgeleitet werden.

Zusammenfassend stellt der Spannungsumsetzer 12 einen Schutz vor "Differential Power Analysis" zur Verfügung, welcher Strom- bzw. Spannungsschwankungen in der Versorgungsspannung $V_{aus}$ 28 der integrierten Schaltung 10 derart nach außen abschirmt, dass charakteristische Anteile des Stromverbrauchs unterdrückt sind. Daher bleibt eine "Differential Power Analysis" mangels extrahierbarer Informationen im Stromverbrauch erfolglos.

BEZUGSZEICHENLISTE

| 100 | Datenverarbeitungseinrichtung |
| 10 | integrierte Schaltung |
| 12 | Spannungsumsetzer |
| 14 | Schalter |
| 16 | Steuerung |
| 18 | Kapazität |
| 20 | Masse |
| 22 | Eingangsspannung $V_{ein}$ |
| 24 | Speiseleitung |
| 26 | Eingangsknoten |
| 28 | Ausgangsspannung $V_{aus}$ |
| 30 | Ausgangsknoten |
| 32 | erste Stellung des Schalters |
| 34 | erster Speiseleitungteil |
| 36 | zweite Stellung des Schalters |
| 38 | zweiter Speiseleitungteil |
| 40 | Eingangskapazität |
| 42 | Ausgangskapazität |
| 44 | Eingangsstrom Iein |
| 46 | Ausgangsstrom $I_{aus}$ |
| 48 | Zeitachse |

**Patentansprüche**

1.  Datenverarbeitungseinrichtung (100), insbesondere Chipkarte, mit einer integrierten Schaltung (10) und einer Stromversorgung, die einen Spannungsumsetzer (12) aufweist, wobei der Spannungsumsetzer (12) zur Unterbrechung eines Eingangssignals zur Spannungseinstellung eines Ausgangssignals zur Stromversorgung vorgesehen ist **dadurch gekennzeichnet, daß** der Spannungsumsetzer einen Ausgangsstrom $I_{aus}$ (46), der die integrierte Schaltung (10) versorgt, in einen gepulsten Eingangsstrom $I_{ein}$ (44) des Spannungsumsetzers (12) mit $V_{aus} \leq V_{ein}$ umsetzt, so dass außen am Eingang des Spannungsumsetzers nur ein gepulster Strom mit konstanter Pulshöhe gemessen werden kann.

2.  Datenverarbeitungseinrichtung (100) nach Anspruch 1, **dadurch gekennzeichnet, daß** der Spannungsumsetzer (12) einen Schalter (14) und eine Steuerung (16) für den Schalter (14) aufweist, wobei der Schalter (14) über eine Kapazität (18) mit Masse (20) verbunden ist und gesteuert von der Steuerung (16) alternierend die Kapazität (18) mit der Eingangsspannung $V_{ein}$ (22) bzw. mit der integrierten Schaltung (10) verbindet.

**3.** Datenverarbeitungseinrichtung (100) nach Anspruch 2, **dadurch gekennzeichnet, daß** der Spannungsumsetzer (12) eine stromführende Speiseleitung (24, 34, 38) mit einem, mit der Eingangsspannung $V_{ein}$ (22) verbundenen, Eingangsknoten (26) und einem die Ausgangsspannung $V_{aus}$ (28) an die integrierte Schaltung (10) abgebenden, Ausgangsknoten (30) aufweist, wobei der Schalter (14) derart angeordnet ist, daß er die Speiseleitung (24) zwischen dem Eingangsknoten (26) und dem Ausgangsknoten (30) unterbricht und in einer ersten Stellung (32) die erste Kapazität (18) über einen ersten Speiseleitungsteil (34) mit dem Eingangsknoten (26) und in einer zweiten Stellung (36) über einen zweiten Speiseleitungsteil (38) mit dem Ausgangsknoten (30) verbindet.

**4.** Datenverarbeitungseinrichtung (100) nach Anspruch 3, **dadurch gekennzeichnet, daß** der Spannungsumsetzer (12) eine Eingangskapazität (40) aufweist, welche zwischen dem Eingangsknoten (26) und der ersten Stellung (32) des Schalters (14) die Speiseleitung (24, 34) mit Masse (20) verbindet.

**5.** Datenverarbeitungseinrichtung nach Anspruch 3 oder 4, **dadurch gekennzeichnet, daß** der Spannungsumsetzer (12) eine Ausgangskapazität (42) aufweist, welche zwischen der zweiten Stellung (36) des Schalters (14) und dem Ausgangsknoten (30) die Speiseleitung (24, 38) mit Masse (20) verbindet.

**6.** Verfahren, bei dem ein Spannungsumsetzer (12) ein Eingangssignal zur Spannungseinstellung eines Ausgangssignals unterbricht, wobei das Ausgangssignal als Versorgungsstrom Iaus (46) für eine integrierte Schaltung (10) eingesetzt wird, **dadurch gekennzeichnet, daß** der Versorgungsstrom $I_{aus}$ (46), der die integrierte Schaltung versorgt, in einen gepulsten Eingangsstrom $I_{ein}$ (44) des Spannungsumsetzers umsetzt, so daß außen am Eingang des Spannungsumsetzers (12) nur ein gepulster Strom mit konstanter Pulshöhe gemessen werden kann.

**7.** Verfahren nach Anspruch 6, **dadurch gekennzeichnet, daß** zur Spannungsversorgung einer integrierten Schaltung, insbesondere einer Chipkarte, eine Eingangsspannung $V_{ein}$ zu einer pulsweitenmodulierten Ausgangsspannung $V_{aus}$ umgesetzt und an die integrierte Schaltung gegeben wird.

**Claims**

**1.** A data processing device (100), notably a chip card, which includes an integrated circuit (10) and a power supply including a voltage converter (12), which voltage converter (12) is arranged for interrupting an input signal for setting the voltage of an output signal for the power supply, **characterized in that** the voltage converter (12) converts an output current $I_{aus}$ (46), powering the integrated circuit (10), into a pulsed input current $I_{ein}$ (44) for the voltage converter (12), where $V_{aus} \leq V_{ein}$. , so that on the exterior at the input of the voltage converter can be measured only a pulsed current having a constant pulse height.

**2.** A data processing device (100) as claimed in claim 1, **characterized in that** the voltage converter (12) includes a switch (14) and a control circuit (16) for the switch (14), the switch (14) being connected to ground (20) via a capacitance (18), and connecting, under the control of the control circuit (16), the capacitance (18) alternately to the input voltage $V_{ein}$ (22) and to the integrated circuit (10).

**3.** A data processing device (100) as claimed in claim 2, **characterized in that** the voltage converter (12) includes a current-carrying supply lead (24, 34, 38) with an input node (26) which is connected to the input voltage $V_{ein}$ (22) and an output node (30) which outputs the output voltage $V_{aus}$ (28) to the integrated circuit (10), the switch (14) being arranged in such a manner that it interrupts the supply lead (24) between the input node (26) and the output node (30) and connects, in a first position (32), the first capacitance (18) to the input node (26) via a first supply lead segment (34) and, in a second position (36), to the output node (30) via a second supply lead segment (38).

**4.** A data processing device (100) as claimed in claim 3, **characterized in that** the voltage converter (12) includes an input capacitance (40) which connects the supply lead (24, 34) to ground (20) between the input node (26) and the first position (32) of the switch (14).

**5.** A data processing device as claimed in claim 3 or 4, **characterized in that** the voltage converter (12) includes an output capacitance (42) which connects the supply lead (24, 38) to ground (20) between the second position (36) of the switch (14) and the output node (30).

**6.** A method in which a voltage converter (12) interrupts an input signal for setting the voltage of an output signal, which output signal is used as a supply current $I_{aus}$ (46) for an integrated circuit (10), **characterized in that** the supply current $I_{aus}$ (46) which

powers the integrated circuit converts into a pulsed input current $I_{ein}$ (44) for the voltage converter so that on the exterior at the input of the voltage converter (12) only a pulsed current of constant pulse height can be measured.

7. A method as claimed in claim 6, **characterized in that** for supplying power to an integrated circuit, more particularly a chip card, an input voltage $V_{ein}$ is converted into a pulse width modulated output voltage $V_{aus}$ and is fed to the integrated circuit.

## Revendications

1. Dispositif de traitement de données (100), plus particulièrement carte à puce, avec un circuit intégré (10) et une alimentation en courant, qui présente un convertisseur de tension (12), le convertisseur de tension (12) étant prévu pour interrompre un signal d'entrée pour régler la tension d'un signal de sortie vers l'alimentation en courant, **caractérisé en ce que** le convertisseur de tension convertit un courant de sortie $I_{aus}$ (46), qui alimente le circuit intégré (10), en un courant d'entrée pulsé $I_{ein}$ (44) du convertisseur de tension (12) avec $V_{aus} \leq V_{ein}$, de sorte que seul un courant pulsé avec une hauteur d'impulsion constante peut être mesuré à l'extérieur au niveau de l'entrée du convertisseur de tension.

2. Dispositif de traitement de données (100) selon la revendication 1, **caractérisé en ce que** le convertisseur de tension (12) présente un commutateur (14) et une commande (16) pour le commutateur (14), le commutateur (14) étant relié à la masse (20) via un condensateur (18) et, commandé par la commande (16), relie en alternance le condensateur (18) avec la tension d'entrée $V_{ein}$ (22) ou avec le circuit intégré (10).

3. Dispositif de traitement (100) selon la revendication 2, **caractérisé en ce que** le convertisseur de tension (12) présente une ligne d'alimentation en courant (24, 34, 38) avec un noeud d'entrée (26) relié à la tension d'entrée $V_{ein}$ (22) et un noeud de sortie (30) délivrant une tension de sortie $V_{aus}$ (28) au circuit intégré (10), le commutateur (14) étant disposé de sorte qu'il interrompt la ligne d'alimentation (24) entre le noeud d'entrée (26) et le noeud de sortie (30) et qu'il relie, dans une première position (32), le premier condensateur (18) via une première partie de la ligne d'alimentation (34) avec le noeud d'entrée (26) et, dans une seconde position (36), via une seconde partie de la ligne d'alimentation (38) avec le noeud de sortie (30).

4. Dispositif de traitement de données (100) selon la revendication 3, **caractérisé en ce que** le convertisseur de tension (12) présente un condensateur d'entrée (40), lequel relie la ligne d'alimentation (24, 34) à la masse (20) entre le noeud d'entrée (26) et la première position (32) du commutateur (14).

5. Dispositif de traitement de données selon la revendication 3 ou 4, **caractérisé en ce que** le convertisseur de tension (12) comporte un condensateur de sortie (42), lequel relie la ligne d'alimentation (24, 38) à la masse (20) entre la seconde position (36) du commutateur (14) et le noeud de sortie (30).

6. Procédé dans lequel un convertisseur de tension (12) interrompt un signal d'entrée pour régler la tension d'un signal de sortie, le signal de sortie étant utilisé comme courant d'alimentation $I_{aus}$ (46) dans un circuit intégré (10), **caractérisé en ce que** le courant d'alimentation $I_{aus}$ (46), qui alimente le circuit intégré (10), converti en courant d'entrée $I_{ein}$ (44) pulsé du convertisseur de tension, de sorte que seul un courant pulsé avec une hauteur de pulsation constante peut être mesuré à l'extérieur au niveau de l'entrée du convertisseur de tension (12).

7. Procédé selon la revendication 6, **caractérisé en ce que**, pour l'alimentation en tension d'un circuit intégré, plus particulièrement d'une carte à puce, une tension d'entrée $V_{ein}$ est convertie en une tension de sortie $V_{aus}$ à modulation de largeur d'impulsions et est envoyée au circuit intégré.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5414614 A
- US 5297201 A
- WO 9015489 A